# EUROPÄISCHE PATENTSCHRIFT

(11) **EP 1 647 455 B1**
(45) Veröffentlichungstag und Bekanntmachung des Hinweises auf die Patenterteilung: **13.08.2008**
(21) Anmeldenummer: 05013952.6
(22) Anmeldetag: 28.06.2005
(51) Int. Cl.: B60R 21/34

(54) **Karosserieelement sowie Absorberkörper für ein Karosserieelement**
Vehicle body element and absorbing body for a vehicle body element.
Elément de carrosserie et corps absorbant pour un élément de carrosserie

(30) Priorität: 05.10.2004 DE 102004048504
(43) Veröffentlichungstag der Anmeldung: 19.04.2006
(73) Patentinhaber: REHAU AG + Co, 95111 Rehau (DE)
(72) Erfinder: Mett, Thomas, 95182 Döhlau (DE)

(56) Entgegenhaltungen:
- EP-A- 0 992 418
- DE-A1- 10 136 898
- DE-A1- 10 223 861
- GB-A- 2 341 147
- US-A- 6 000 738
- PATENT ABSTRACTS OF JAPAN Bd. 1995, Nr. 04, 31. Mai 1995 (1995-05-31) & JP 07 017341 A (NISSAN MOTOR CO LTD), 20. Januar 1995 (1995-01-20)

## Beschreibung

Die Erfindung betrifft ein Karosserieelement mit einem Absorberkörper nach dem Oberbegriff des Anspruchs 1. Ferner betrifft die Erfindung einen Absorberkörper für ein derartiges Karosserieelement nach Anspruch 10.

Karosserieelemente mit einem Absorberkörper der eingangs genannten Art sind für den Fußgängerschutz in verschiedenen Ausgestaltungen bekannt. Beispiele finden sich in DE 100 63 582 A1, DE 101 02 187 A1, DE 199 48 732 A1, DE 102 42 258 A1, DE 199 59 606 A1, und in DE 101 36 898 A1. Bei diesen bekannten Gestaltungen führt schon eine relativ geringe statische Belastung des Karosserieelements senkrecht zur Außenhaut dazu, dass der Absorberkörper ungewollt plastisch nachgibt. Dies wirkt sich negativ auf das optische Erscheinungsbild des Fahrzeugs aus, da Spaltverläufe zwischen benachbarten Karosserieelementen und auch Flächenübergänge optisch nicht mehr ansprechend wirken. Dies gilt insbesondere dann, wenn der Absorberkörper nahe eines derartigen Übergangsbereichs zwischen zwei Karosserieelementen angeordnet ist. Zudem haben die bekannten Absorberkörper eine relativ große Einbauhöhe, wobei oft trotz dieser Einbauhöhe nur ein relativ geringer Teil des an sich großen Deformationswegs des Absorberkörpers tatsächlich effizient zur Energieabsorption genutzt wird.

Es ist daher eine Aufgabe der vorliegenden Erfindung, ein Karosserieelement der eingangs genannten Art derart weiterzubilden, dass es einer definierten statischen Belastung standhält und gleichzeitig eine effiziente Energieabsorption bei einer dynamischen Belastung unter Nutzung eines kompakten Absorberkörpers gewährleistet.

Diese Aufgabe ist erfindungsgemäß gelöst durch ein Karosserieelement mit den im Kennzeichnungsteil des Anspruchs 1 angegebenen Merkmalen.

Erfindungsgemäß ist eine Mehrzahl von Sollknick-Elementen beim Absorberkörper vorgesehen.

Die energieabsorbierende Wirkung des Absorberkörpers wird auf die einzelnen Sollknick-Elemente verteilt, so dass an jedes einzelne Sollknick-Element relativ geringe und damit gut beherrschbare Anforderungen gestellt werden, was die Belastungsstabilität bei statischer Belastung und was das definierte Knickverhalten bei dynamischer Belastung angeht. Über die Formgebung der Sollknick-Elemente, die Materialwahl für diese, die Stärke der Sollknick-Elemente und über die Dichte der Anordnung der Sollknick-Elemente zwischen den Stützwänden lassen sich Grenzwerte für die statische Belastung einerseits und für das Auslösen, das heißt das definierte Einknicken, bei dynamischer Belastung andererseits gezielt vorgeben. Dabei können bestimmte typische Belastungssituationen berücksichtigt werden, so dass sich der Absorberkörper zum Beispiel zum Einsatz bei einem Kotflügel oder auch bei einem Stoßfänger eignet. Beim Kotflügeleinsatz gewährleistet das erfindungsgemäße Karosserieelement eine effektive Dämpfung insbesondere eines Kopfaufpralls eines Fußgängers. Der Absorberkörper eignet sich dabei besonders zum Einsatz in der Fronthaube eines Kraftfahrzeugs benachbarten Kotflügelbereich. Dabei kann der Absorberkörper so ausgelegt werden, dass das Belastungsverhalten des Kotflügels dem der benachbarten Fronthaube entspricht. Auf diese Weise ist ein guter Fußgängerschutz gegeben. Der Absorberkörper kann kompakt und insbesondere mit geringer Einbauhöhe ausgeführt sein.

Ein Karosserieelement nach Anspruch 2 lässt sich als separates Bauteil mit relativ geringem Aufwand fertigen. Alternativ ist es möglich, den Absorberkörper integral an das Karosserieelement anzuformen, was den Montageaufwand verringert.

Ein nach Anspruch 3 geformtes Sollknick-Element weist ein gut definiertes Knickverhalten auf. Belastungsgrenzwerte für die statische und/oder dynamische Belastung lassen sich bei dieser Formgebung zusätzlich über den Ausgangs-Knickwinkel, d.h. den Knickwinkel der unbelasteten Sollknick-Elemente einstellen. Derart abgewinkelte Sollknick-Elemente sind in ihrer Ausgangsstellung statisch ausreichend belastbar und weisen bei dynamischer Belastung durch einen Aufprall eine gut absorbierende Wirkung auf.

Beim Ausgangs-Knickwinkel nach Anspruch 4 hat sich für die Erzielung eines an die Verhältnisse beim Fußgängerschutz gut anpassbaren Belastungsverhaltens als besonders vorteilhaft herausgestellt.

Eine Ausgestaltung der Kantenabschnitte nach den Ansprüchen 5 und 6 unterstützt ein definiertes Knick- bzw. Verformungsverhalten des Absorberkörpers.

Ein Absorberkörper nach Anspruch 7 kann einen großen Deformationsweg bereitstellen.

Materialien nach den Ansprüchen 8 und 9 ermöglichen eine gute Anpassung des Belastungsverhaltens des Absorberkörpers an vorgegebene-Grenzwerte.

Eine weitere Aufgabe der Erfindung ist es, einen Absorberkörper für ein durch offenkundige Vorbenutzung bekanntes Karosserieelement bereitzustellen, welcher bei kompaktem Aufbau ein entsprechend dem oben Ausgeführten gut an die Erfordernisse beim Aufprallschutz angepasstes Belastungsverhalten zeigt.

Diese Aufgabe ist erfindungsgemäß gelöst durch einen Absorberkörper nach Anspruch 10.

Die Vorteile dieses Absorberkörpers entsprechen denjenigen, die oben unter Bezugnahme auf die Ansprüche 1 bis 9 ausgeführt wurden.

Ausführungsbeispiele der Erfindung werden nachfolgend anhand der Zeichnung näher erläutert. In dieser zeigen:
- **Fig. 1**: einen Ausschnitt eines Karosserieelements mit einem Absorberkörper;
- Fig. 2: einen Ausschnitt eines Karosserieelements mit einer weiteren Ausführungsform eines Absorberkörpers.

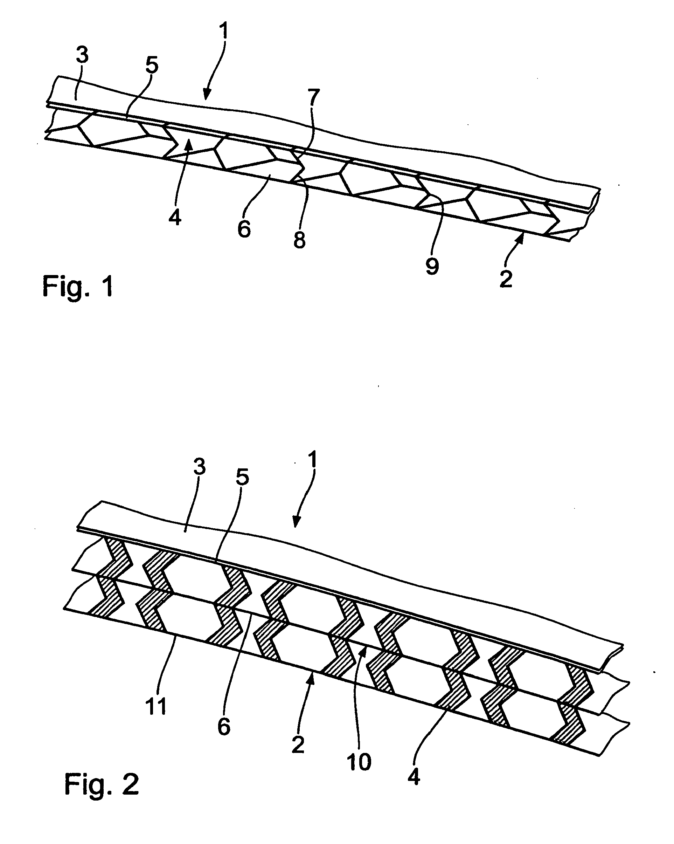

Fig.1 zeigt ausschnittsweise ein Karosserieelement 1 eines ansonsten nicht dargestellten Fahrzeugs mit einem Absorberkörper 2 zur Dämpfung eines Aufpralls, zum Beispiel eines Fußgängers, auf das Karosserieelement 1. Vom Karosserieelement 1 ist in Fig. 1 lediglich ein Ausschnitt einer Außenhaut eines Fahrzeugs gezeigt. Dieser dargestellte Bereich wird nachfolgend auch als Außenhautabschnitt 3 des Karosserieelements 1 bezeichnet. Beim Karosserieelement 1 kann es sich um einen Kotflügel oder auch um einen Stoßfänger handeln.

Der Absorberkörper 2 umfasst eine Mehrzahl von unter dem Außenhautabschnitt 3 des Karosserieelements 1 angeordneten Sollknick-Elementen 4 aus Kunststoff. Letztere sind zwischen zwei unter dem Außenhautabschnitt 3 des Karosserieelements 1 hintereinander versetzt angeordneten Stützwänden 5, 6 angeordnet. Die in Fig. 1 obere Stützwand 5 liegt dabei direkt unter dem Außenhautabschnitt 3. Die in Fig. 1 untere Stützwand 6 ist aufgrund der zwischenliegenden Sollknick-Elemente 4 vom Außenhautabschnitt 3 nach innen beabstandet.

Die Sollknick-Elemente 4 sind so vorgeformt, dass ein definiertes Knickverhalten vorliegt. Jedes Sollknick-Element 4 ist als Winkelelement ausgeführt und hat einen ersten Wandabschnitt 7, der an die obere Stützwand 5 angeformt ist, und einen zweiten Wandabschnitt 8, der an die untere Stützwand 6 angeformt ist. Am Übergang zwischen den beiden Wandabschnitten 7, 8 liegt ein Kantenabschnitt 9 des Sollknick-Elements 4 vor. Der Kantenabschnitt 9 verläuft parallel zu den Wandebenen der Stützwände 5, 6 und senkrecht zu einer Haupterstreckungsrichtung der Stützwände 5,6. Die Kantenabschnitte 9 aller Sollnick-Elemente 4 verlaufen zueinander parallel und zudem in etwa parallel zur Außenhaut des Fahrzeugs im Bereich des Absorberkörpers 2.

Beim dargestellten Ausführungsbeispiel haben die Sollknick-Elemente 4 zwischen den Wandabschnitten 7, 8 im Bereich des Kantenabschnitts 9 einen unvorbelasteten Ausgangs-Knickwinkel von 120°. Auch andere Knickwinkel, zum Beispiel zwischen 90° und 150°, sind möglich.

Die Sollknick-Elemente 4 sind unter dem Außenhautabschnitt 3 des Karosserieelements 1 nebeneinander angeordnet. Die Kantenabschnitte 9 sind alternierend orientiert. Die Sollknick-Elemente 4 sind also derart orientiert, dass die Kantenabschnitte 9 paarweise aufeinander zuweisen beziehungsweise voneinander wegweisen.
Bei einer Belastung des Karosserieelements 1 mit einer Kraftkomponente senkrecht zum Außenhautabschnitt 3 verhält sich der Absorberkörper 2 folgendermaßen: Einer statischen Belastung hält der Absorberkörper 2 bis zu einer vorgegebenen Kraftgrenze stand. Diese Kraftgrenze kann so gewählt werden, dass der Absorberkörper 2 einer typischen statischen Belastung des Karosserieelements 1 standhält, zum Beispiel dann, wenn sich eine Person an das Karosserieelement 1 lehnt oder auf dieses setzt. Einer dynamischen Belastung halten die Sollknick-Elemente 4 des Absorberkörpers 2 bis zu einem bestimmten Grenzwert des Kraftstoßes ebenfalls stand.

Dieser Grenzwert wird nachfolgend auch als Triggerschwelle bezeichnet. Oberhalb der Triggerschwelle geben die Sollknick-Elemente 4 nach und knicken definiert ein, wobei der Knickwinkel zwischen den Wandabschnitten 7, 8 sich ausgehend vom Ausgangs-Knickwinkel verkleinert. Im Bereich des Kantenabschnitts 9 und am Übergang der Wandabschnitte 7, 8 zu den Stützwänden 5, 6 brechen die knickenden Sollknick-Elemente 4 dann definiert. Die alternierende Orientierung der Kantenabschnitte 9 sorgt dafür, dass sich bei diesem definierten Knicken und Brechen die Stützwände 5, 6 ohne größeren seitlichen Versatz aufeinander zu bewegen. Das Verformungsverhalten des Absorberkörpers 2 ist daher gut definiert.

Die Größe der Triggerschwelle kann bei der Auslegung des Absorberkörpers 2 beeinflusst werden durch die Materialwahl für die Sollknick-Elemente 4, durch die Stärke von diesen, durch den Ausgangs-Knickwinkel, durch die Ausdehnung der Kantenabschnitte 9, also die Breite des Absorberkörpers 2 in Richtung der Kantenabschnitte 9, und durch die Anzahl der Sollknick-Elemente 4 längs eines vorgegebenen Längenabschnitts des Absorberkörpers 2, also die Dichte der Sollknick-Elemente 4. Je kleiner der Ausgangs-Knickwinkel ist, desto niedriger sind Kraftgrenzwert und Triggerschwelle. Die Abhängigkeit der Grenzwerte von den anderen oben erwähnten Beeinflussungsgrößen ist dem Fachmann klar und bedarf daher keiner ausführlichen Diskussion.

Der Absorberkörper 2 ist insgesamt aus Polyamid (PA) mit einem Glasfaseranteil von 30 Gew.-% (Gewichtsprozent), insbesondere aus PA6 GF30. Auch ein Aufbau aus einem anderen, auch aus einem unverstärkten, Polyamid ist möglich. Alternativ ist auch die Ausführung des Absorberkörpers 2 aus einem anderen Kunststoff, zum Beispiel aus Polypropylen (PP), möglich.

Der Absorberkörper 2 stellt bei der Ausführung nach Fig. 1 ein eigenes Strukturelement dar, welches mit dem Karosserieelement 1 über Befestigungselemente, zum Beispiel durch Clipsverbindungen, verbunden ist. Alternativ ist es möglich, den Absorberkörper 2 integral an das Karosserieelement 1 anzuformen.

Fig. 2 zeigt eine ähnliche Darstellung eines Karosserieelements 1 mit einer weiteren Ausführungsform eines Absorberkörpers 10. Komponenten, die denjenigen entsprechen, die vorstehend schon unter Bezugnahme auf Fig. 1 erläutert wurden, tragen die gleichen Bezugsziffern und werden nicht nochmals im einzelnen diskutiert.

Der Absorberkörper 10 weist neben den beiden Stützwänden 5, 6 noch eine dritte Stützwand 11 auf, die zur Stützwand 6 nochmals gegenüber dem Außenhautabschnitt 3 nach innen versetzt angeordnet ist. Der Absorberkörper 10 weist daher zwei Ebenen von Sollknick-Elementen 4 auf. Eine erste Ebene von Sollknick-Elementen 4 ist wie beim Absorberkörper 3 nach Fig. 1 zwischen den Stützwänden 5, 6 angeordnet. Eine zweite Ebene von Sollknick-Elementen 4 ist beim Absorberkörper 10 zwischen den Stützwänden 6 und 11 angeordnet. Der Aufbau und die Anordnung der Sollknick-Elemente 4 der zweiten Ebene entspricht dem der ersten Ebene.

Das Belastungsverhalten des Absorberkörpers 10 entspricht dem des Absorberkörpers 2, wobei beim Absorberkörper 10 aufgrund der beiden hintereinander liegenden Ebenen von Sollknick-Elementen 4 ein größerer Deformationsweg zur Verfügung steht, der bei einem Aufprall genutzt werden kann, um eine größere Energieabsorption zu gewährleisten.

Neben einer Winkelform der Sollknick-Elemente wie bei den Sollknick-Elementen 4 nach den Fig. 1 und 2 sind auch andere Formgestaltungen der Sollknick-Elemente 4 möglich, die ein definiertes Knickverhalten zulassen. Insbesondere ist es möglich, die Sollknick-Elemente sichelförmig auszugestalten.

## Patentansprüche

1. Karosserieelement (1) mit einem Absorberkörper (2; 10) zur Dämpfung eines Aufpralls auf das Karosserieelement (1), wobei der Absorberkörper (2; 10) eine Mehrzahl von unter der Außenhaut (3) des Karosserieelements (1) nebeneinander angeordneten Sollknick-Elementen (4) aus Kunststoff aufweist, die zwischen mindestens zwei unter der Außenhaut (3) des Karosserieelements (1) hintereinander versetzt angeordneten Stützwänden (5, 6; 5, 6, 11) des Absorberkörpers (2; 10) angeordnet und so vorgeformt sind, dass ein definiertes Knickverhalten der Sollknick-Elemente (4) vorliegt, **dadurch gekennzeichnet, dass** der Absorberkörper (10) mehrere Ebenen von Sollknick-Elementen (4) aufweist, die jeweils zwischen Stützwänden (5, 6, 11) angeordnet sind.

2. Karosserieelement nach Anspruch 1, **dadurch gekennzeichnet, dass** der Absorberkörper (2; 10) ein eigenes Strukturelement darstellt, welches mit dem Karosserieelement (1) verbunden ist,

3. Karosserieelement nach Anspruch 1 oder 2, **dadurch gekennzeichnet, dass** jedes Sollknick-Element (4) als Winkelelement ausgeführt ist,
- mit einem ersten Wandabschnitt (7), der mit einer ersten der Stützwände (5) verbunden ist,
- mit einem zweiten Wandabschnitt (8), der mit einer zweiten der Stützwände (6) verbunden ist,
- mit einem Kantenabschnitt (9) am Übergang der beiden Wandabschnitte (7, 8), wobei der Kantenabschnitt (9) parallel zu den Wandebenen der Stützwände (5, 6; 5, 6, 11) verläuft.

4. Karosserieelement nach Anspruch 3, **gekennzeichnet durch** einen Ausgangs-Knickwinkel des Sollknick-Elements (4) zwischen den Wandabschnitten (7, 8) im Bereich des Kantenabschnitts (9) von 90° bis 150°, bevorzugt von 120°.

5. Karosserieelement nach Anspruch 3 oder 4, **dadurch gekennzeichnet, dass** die Kantenabschnitte (9) aller Sollknick-Elemente (4) zueinander parallel und insbesondere senkrecht zu einer Haupterstreckungsrichtung der Stützwände (5, 6; 5, 6, 11) verlaufen.

6. Karosserieelement nach einem der Ansprüche 3 bis 5, **dadurch gekennzeichnet, dass** die Kantenabschnitte (9) alternierend orientiert sind.

7. Karosserieelement nach einem der Ansprüche 1 bis 6, **gekennzeichnet durch** Sollknick-Elemente (4) aus Polyamid (PA), insbesondere aus glasfaserverstärktem (GF) Polyamid, besonders bevorzugt aus einem Polyamid 6 (PA6 GF) mit einem Glasfaseranteil von 30 Gewichtsprozent.

8. Karosserieelement nach einem der Ansprüche 1 bis 6, **gekennzeichnet durch** Sollknick-Elemente (4) aus Polypropylen (PP).

9. Absorberkörper (2; 10) nach einem der Ansprüche 1 bis 8 für ein Karosserieelement (1).

## Claims

1. Vehicle body element (1) with an absorbing body (2; 10) for damping an impact on the vehicle body element (1), wherein the absorbing body (2; 10) has a plurality of plastic predetermined buckling elements (4) which are arranged next to one another under the outer skin (3) of the vehicle body element (1), are arranged between at least two supporting walls (5, 6; 5, 6, 11) of the absorbing body (2; 10) offset consecutively under the outer skin (3) of the vehicle body element (1) and are pre-shaped in such a manner that the predetermined buckling elements (4) have a defined buckling behaviour, **characterized in that** the absorbing body (10) has a plurality of planes of predetermined buckling elements (4) that are each arranged between supporting walls (5, 6, 11).

2. Vehicle body element according to Claim 1, **characterized in that** the absorbing body (2; 10) constitutes a dedicated structural element which is connected to the vehicle body element (1).

3. Vehicle body element according to Claim 1 or 2, **characterized in that** each predetermined buckling element (4) is designed as an angular element,
- with a first wall section (7) which is connected to a first of the supporting walls (5),
- with a second wall section (8) which is connected to a second of the supporting walls (6),
- with an edge section (9) at the transition between the two wall sections (7, 8), the edge section (9) running parallel to the wall planes of the supporting walls (5, 6; 5, 6, 11).

4. Vehicle body element according to Claim 3, **characterized by** an initial buckling angle of the predetermined buckling element (4) between the wall sections (7, 8) of 90° to 150°, preferably of 120°, in the region of the edge section (9).

5. Vehicle body element according to Claim 3 or 4, **characterized in that** the edge sections (9) of all of the predetermined buckling elements (4) run parallel to one another and in particular perpendicularly to a main direction of extent of the supporting walls (5, 6; 5, 6, 11).

6. Vehicle body element according to one of Claims 3 to 5, **characterized in that** the edge sections (9) are oriented in an alternating manner.

7. Vehicle body element according to one of Claims 1 to 6, **characterized by** predetermined buckling elements (4) made of polyamide (PA), in particular of glass-fibre-reinforced (GF) polyamide, particularly preferably of a polyamide 6 (PA6 GF) with a glass fibre content of 30 per cent by weight.

8. Vehicle body element according to one of Claims 1 to 6, **characterized by** predetermined buckling elements (4) made of polypropylene (PP).

9. Absorbing body (2; 10) according to one of Claims 1 to 8 for a vehicle body element (1).

## Revendications

1. Elément de carrosserie (1) comprenant un corps absorbant (2 ; 10) pour l'amortissement d'un choc sur l'élément de carrosserie (1), le corps absorbant (2 ; 10) présentant une pluralité d'éléments destinés à fléchir (4), en plastique, disposés les uns à côté des autres sous la peau extérieure (3) de l'élément de carrosserie (1), qui sont disposés et préformés entre au moins deux parois de support (5, 6 ; 5, 6, 11) du corps absorbant (2 ; 10) décalées l'une derrière l'autre sous la peau extérieure (3) de l'élément de carrosserie (1), de telle sorte qu'un comportement de fléchissement défini des éléments destinés à fléchir (4) soit obtenu, **caractérisé en ce que** le corps absorbant (10) présente plusieurs plans d'éléments destinés à fléchir (4), qui sont disposés à chaque fois entre des parois de support (5, 6, 11).

2. Elément de carrosserie selon la revendication 1, **caractérisé en ce que** le corps absorbant (2 ; 10) constitue un élément structurel propre qui est connecté à l'élément de carrosserie (1).

3. Elément de carrosserie selon la revendication 1 ou 2, **caractérisé en ce que** chaque élément destiné à fléchir (4) est réalisé sous forme d'élément coudé,
- avec une première portion de paroi (7) qui est connectée à une première des parois de support (5),
- avec une deuxième portion de paroi (8) qui est connectée à une deuxième des parois de support (6),
- avec une portion d'arête (9) au niveau de la transition entre les deux portions de paroi (7, 8), la portion d'arête (9) s'étendant parallèlement aux plans des parois de support (5, 6 ; 5, 6, 11).

4. Elément de carrosserie selon la revendication 3, **caractérisé par** un angle de fléchissement de départ de l'élément destiné à fléchir (4) entre les portions de paroi (7, 8) dans la région de la portion d'arête (9) compris entre 90° et 150°, de préférence de 120°.

5. Elément de carrosserie selon la revendication 3 ou 4, **caractérisé en ce que** les portions d'arête (9) de tous les éléments destinés à fléchir (4) s'étendent parallèlement les unes aux autres et notamment perpendiculairement à une direction d'étendue principale des parois de support (5, 6 ; 5, 6, 11).

6. Elément de carrosserie selon l'une quelconque des revendications 3 à 5, **caractérisé en ce que** les portions d'arête (9) sont orientées en alternance.

7. Elément de carrosserie selon l'une quelconque des revendications 1 à 6, **caractérisé par** des éléments destinés à fléchir (4) en polyamide (PA), notamment en polyamide renforcé par des fibres de verre (GF), particulièrement préférablement en un polyamide 6 (PA6 GF) ayant une proportion de fibres de verre de 30 pour cent en poids.

8. Elément de carrosserie selon l'une quelconque des revendications 1 à 6, **caractérisé par** des éléments destinés à fléchir (4) en polypropylène (PP).

9. Corps absorbant (2 ; 10) selon l'une quelconque des revendications 1 à 8, pour un élément de carrosserie (1).
